# EUROPEAN PATENT APPLICATION

(11) **EP 2 815 801 A1**
(43) Date of publication of application: **24.12.2014**
(21) Application number: 13173142.4
(22) Date of filing: 21.06.2013
(51) Int. Cl.: B01D 53/86

(54) **Flue gas treatment system and method**

(71) Applicant: ALSTOM Technology Ltd, 5400 Baden (CH)
(72) Inventor: Wang, Wuyin, 352 49 Växjö (SE); Böös, Erik W., 35594 Vederslöv (SE); Grubbström, Jörgen Per-Olof, 352 55 Växjö (SE); Nilsson, Lars, 36040 Rottne (SE)

(57) **Abstract**

The flue gas treatment system (10) for a boiler (11) comprises a gas purifying unit (40) and a carbon dioxide separation unit (26) downstream of the gas purifying unit (40). The gas purifying unit (40) comprises a first compression step (19), a selective catalytic reduction unit (SCR) downstream of the first compression step (19), a second compressor step (20) downstream of the selective catalytic reduction unit (SCR).

## Description

### TECHNICAL FIELD

The present disclosure relates to a flue gas treatment system and method. The system and method are preferably used together with an oxifyring boiler, i.e. a boiler that is supplied with oxygen (in addition to fuel); in addition, preferably the flue gas from the boiler is partly recirculated and mixed with the oxygen to be then supplied into the boiler for combustion with the fuel.

### BACKGROUND

EP 2 481 471 discloses a fuel gas treatment system that is provided downstream of an oxyfiring boiler.

The treatment system includes pre-treatment units such as electrostatic precipitators and/or filters, a wet scrubber for sulphur dioxide removal, a condenser for humidity control and reduction. Downstream of the pre-treatment units, the treatment system has a gas purifying unit for NOₓ removal and a separation unit for CO₂ separation; CO₂ is then further compressed and sequestrated.

The gas purifying unit has an intercooled compressor step and downstream of it a selective catalytic reduction unit (SCR) for reduction of NOₓ to N₂ and H₂O.

This treatment system has the advantage that humidity is removed from the flue gas before the flue gas is directed into the gas purifying unit; this leads to a much lower volume of gas flow that has to pass through the gas purifying unit, because humidity (i.e. water) can be up to 40% of volume flow of the flue gas.

In addition, efficiency and effective life span of the selective catalytic reduction unit are increased, as the flue gas enters the selective catalytic reduction unit, it has already undergone a number of cleaning steps such as dust or sulphur dioxide removal, such that clogging of the catalyst is minimised.

Nevertheless, since the selective catalytic reduction unit requires a relative high temperature for the flue gas, the flue gas from the condenser needs heating before it can be supplied to the selective catalytic reduction unit. Heating can be provided for example by electrical heating or super-heated steam or other heating medium.

### SUMMARY

An aspect of the disclosure includes providing a system and a method by which the efficiency is improved.

For example efficiency is improved because no or limited heating is needed upstream of the selective catalytic reduction unit SCR to heat the flue gas up to the required temperature.

Another aspect of the disclosure includes providing a system and a method that reduce corrosion problems in the gas purifying unit and downstream of the gas purifying unit.

For example this is achieved by reducing and limiting the NO conversion into NO₂ at and/or downstream of the gas purifying unit.

These and further aspects are attained by providing a system and a method in accordance with the accompanying claims.

Advantageously, the disclosure provides for an improved protection against corrosion after the gas purifying unit, such as at the driers, due to a reduced NO₂ content of the flue gas.

### BRIEF DESCRIPTION OF THE DRAWINGS

Further characteristics and advantages will be more apparent from the description of a preferred but non-exclusive embodiment of the system and method, illustrated by way of non-limiting example in the accompanying drawings, in which:

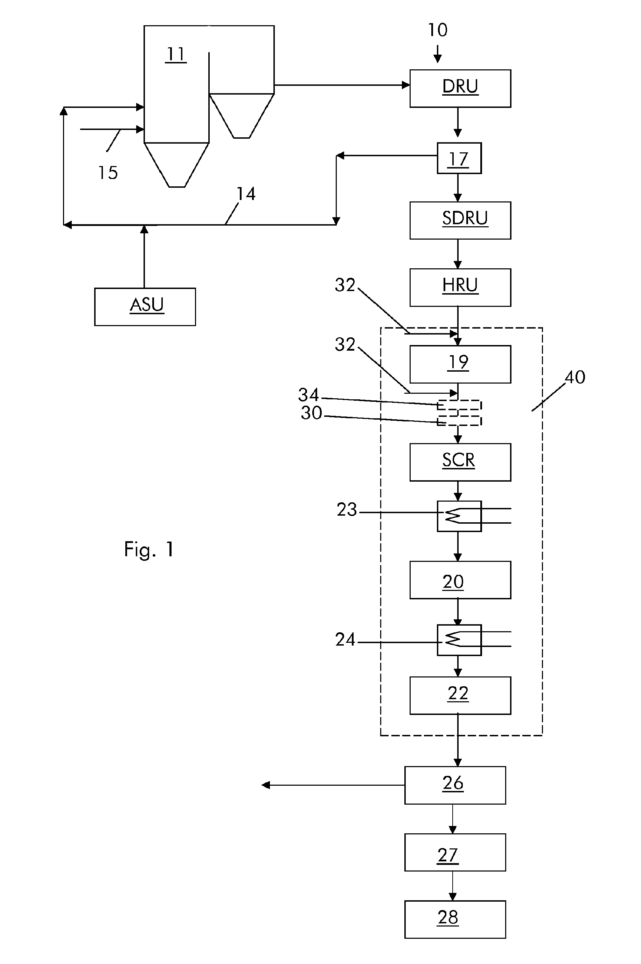

Figure 1 is a schematic view of a flue gas treatment system connected downstream of a boiler.

### DETAILED DESCRIPTION OF EXEMPLARY EMBODIMENTS

With reference to the figure, this shows a flue gas treatment system 10 for a boiler 11.

The boiler 11 is preferably an oxyfiring boiler, i.e. a boiler that is supplied with oxygen, preferably a mixture of oxygen and recirculated flue gas.

The oxygen can be produced in an air separation unit ASU of conventional type. In addition, the ASU is preferably connected to and supplies the oxygen to a recirculation line 14 through which a part of the flue gas discharged from the boiler 11 is supplied back to the boiler 11. The boiler 11 is also supplied with a fuel through 15, such as for example coal, oil, gas, etc.

The flue gas discharged from the boiler 11 is supplied to one or usually more than one flue gas pre-treatment units.

The flue gas pre-treatment units include one or more among a dust removal unit DRU such as a filter or an electrostatic precipitator, a sulphur dioxide removal unit SDRU, such as a wet scrubber and a humidity removal unit HRU, such as a condenser for example defined by a cooler. It is clear that the order of succession of the pre-treatment units can also be different from the one described.

In addition a splitter 17 is also provided; the splitter 17 divides the flue gases into a recirculated flow that is directed through recirculation line 14 back to the boiler 11 and the flue gas that is discharged from the flue gas treatment system 10. The splitter 17 can be provided between the dust removal unit DRU and the sulphur removal unit SDRU as shown in figure 1, but in different embodiments it can also be provided at a different position, such as for example between the sulphur dioxide removal unit SDRU and the humidity removal unit HRU.

Downstream of the condenser defining the humidity removal unit HRU, the flue gas is supplied to a gas purifying unit 40.

The gas purifying unit 40 comprises at least two compression steps.

The gas purifying unit 40 comprises a first compression step 19 (the first compression step 19 can include one or several compressor stages), a selective catalytic reduction unit SCR for conversion of NOₓ into N₂ and H₂O downstream of the first compression step 19, and a second compressor step 20 (the second compression step 20 can include one or several compressor stages) downstream of the selective catalytic reduction unit SCR.

The selective catalytic reduction unit SCR has specific requirements for the flue gas temperature passing through it in order to optimize the reduction reaction of NOₓ into N₂ and H₂O.

The flue gas temperature at the outlet of the first compression step 19 matches the required flue gas temperature at an inlet of the selective catalytic reduction unit SCR.

In other words, since during compression the flue gas temperature is increased, the increase of flue gas temperature at the outlet of the compression step 19 is controlled in order to have at the outlet of the first compression step 19 a flow whose temperature is optimized for the selective catalytic reduction unit SCR.

Thus, in this embodiment the outlet of the first compression step 19 can be directly connected to the inlet of the selective catalytic reduction unit SCR without additional components inbetween. In this case the pressure and temperature of the flue gas at the outlet of the first compression step 19 are optimized and only possible cooling and/or drop pressure in the duct between the first compression step 19 and the selective catalytic reduction unit SCR have to be taken into account to have flue gas with optimized pressure and temperature at the selective catalytic reduction unit SCR.

Alternatively, a heat exchanger 30 (heater or cooler) for the flue gas can be provided downstream of the first compression step 19 and upstream of the selective catalytic reduction unit SCR, in order to fit the operational temperature range of the selective catalytic reduction unit SCR.

In this case the pressure and temperature of the flue gas at the outlet of the first compression step 19 can differ from those needed at the selective catalytic reduction unit SCR, such that possible heating/cooling and/or pressure drop between the first compression step 19 and the selective catalytic reduction unit SCR are balanced and the pressure and/or temperature at the selective catalytic reduction unit SCR are optimized.

In another embodiment an injection 32 for a reducing agent and/or a mixing system 34 can be provided.

The injection 32 can be located upstream of the selective catalytic reduction unit SCR and/or upstream the first compressor step 19 and/or directly before the inlet of the selective catalytic reduction unit SCR.

For example, the attached figure shows that the injection 32 is located between the outlet of the first compression step 19 and the inlet of the selective catalytic reduction unit SCR and/or upstream the first compression step 19.

The injection 32 can be used to inject a reducing agent for the conversion of NO/NO₂ into N₂ and H₂O. The reducing agent can be ammonia or urea or hydrogen or another reducing agent.

The mixing device 34 can be located downstream the injection 32, for example between the injection 32 and the selective catalytic reduction unit SCR and/or between the injection 32 and the heat exchanger 30.

Advantageously, the first compression step 19 can be a substantially adiabatic compression step (i.e. a compression without intercooling of the gas being compressed). In other words at the first compression step 19 the flue gas does not undergo an intercooled compression. This is anyhow not mandatory.

Preferably, the first compression step is arranged to compress the flue gas up to a pressure of 2-20 bar and preferably 5-15 bar.

In addition, preferably the flue gas has a temperature between 120-310°C and preferably 165-250°C at the inlet of the selective catalytic reduction unit SCR. This can be achieved either through the first compression step 19 or the heat exchanger 30.

The second compressor step 20 further compresses the flue gas to increase its pressure in view of the following treatments.

Downstream of the first compression step 19 and second compression step 20 heat exchangers 23, 24 can be provided to recover the heat accumulated by the flue gas during the compression; this heat can for example be used in a steam cycle or for other purposes.

Since at the selective catalytic reduction unit SCR water is generated through the reaction NOₓ→N₂+H₂O, a dryer 22 is preferably provided downstream of the second compression step 20.

The dryer 22 is connected to a carbon dioxide separation unit 26, this can be defined by a distillation column or a cooler to cause liquefaction of the CO₂ or other means. The carbon dioxide separation unit 26 separates the carbon dioxide CO₂ from other gases still contained in the flue gas, mainly O₂ and N₂, and directs the carbon dioxide to a carbon dioxide compression stage 27 and then to a carbon dioxide sequestration stage 28. The other gas other than CO₂ (i.e. mainly O₂ and N₂) are vented to the atmosphere.

The operation of the flue gas treatment system is apparent from that described and illustrated and is substantially the following.

The flue gas at the outlet of the boiler 11 contains mainly CO₂, O₂, H₂O, NOₓ, SO₂, dust.

While passing though the pre-treatment units the dust is removed (at the dust removal unit DRU).

Then the flue gas is splitted at the splitted 17 and between 50-75% by volume of the flue gas is recirculated back to the boiler, and the remaining 25-50% by volume of the gas is supplied to the sulphur dioxide removal unit SRU.

At the sulphur dioxide removal unit SDRU the SO₂ is removed and humidity is then reduced at the humidity removal unit HRU.

Thus the gas containing mainly CO₂, O₂, H₂O and NOₓ is supplied to the first compression step 19 where it is compressed and its temperature is increased up to a level that optimizes the reaction NOₓ -> N₂+H₂O (this reaction occurs at the SCR).

The flue gas is thus supplied to the selective catalytic reduction unit SCR where the conversion of NOₓ into N₂ and H₂O occurs with high efficiency (between 80-90% of removal of NOₓ is obtained). The gas discharged from the selective catalytic reduction unit SCR contains mainly CO₂, O₂, N₂, H₂O.

After cooling at the heat exchanger 23, further compression at the second compression step 20 and further cooling at the heat exchange 24, the flue gas is supplied to the dryer 22 for H₂O removal.

Pressure enhances conversion of NO into NO₂ and, as known, NO₂ is the main source of corrosion at the gas purifying unit 40 and downstream of it. Advantageously, since the amount of NO/NO₂ downstream of the selective catalytic reduction unit SCR is very low, the pressure increase at the second compression step 20 does not cause a substantial increase of NO₂ and thus it does not substantial corrosion problems.

The flue gas discharged from the dryer 22 contains mainly CO₂, O₂ and N₂; this flue gas is supplied to the carbon dioxide separation unit 26 such as distillation column, where N₂ and O₂ (and other gas eventually contained in the flue gas such as argon) are vented. The carbon dioxide CO₂ is further compressed at 27 and stored at 28.

The present invention also refers to a method for flue gas treatment. The method comprises purifying the flue gas and separating carbon dioxide after purifying. Purifying comprises a first flue gas compression, then flue gas selective catalytic reduction, then a second compression.

The flue gas temperature at the outlet of the first compression step matches the temperature needed at the inlet of the selective catalytic reduction unit or alternatively additional heating or cooling can be provided to optimise the flue gas temperature for the selective catalytic reduction unit SCR.

The first compression step can be a substantially adiabatic compression step, this is anyhow not mandatory.

The method preferably also includes drying the flue gas after the second compression and, after carbon dioxide separating, the carbon dioxide compression and then sequestration (for example storing or transportation).

During the first compression the flue gas is preferably compressed up to a pressure of 2-20 bar and preferably 5-15 bar. In addition, the flue gas has a temperature between 120-310°C and preferably 165-250°C at the inlet of the selective catalytic reduction unit SCR.

Naturally the features described may be independently provided from one another.

In practice the materials used and the dimensions can be chosen at will according to requirements and to the state of the art.

### REFERENCE NUMBERS

- 10: flue gas treatment system
- 11: boiler
- 14: recirculation line
- 15: fuel supply
- 17: splitter
- 19: first compression step
- 20: second compression step
- 22: dryer
- 23: heat exchanger
- 24: heat exchanger
- 26: carbon dioxide separation unit
- 27: carbon dioxide compression stage
- 28: carbon dioxide sequestration stage
- 30: heat exchanger
- 32: injection
- 34: mixing device
- 40: gas purifying unit
- ASU: air separation unit
- DRU: dust removal unit
- SDRU: sulphur dioxide removal unit
- HRU: humidity removal unit
- SCR: selective catalytic reduction unit

## Claims

1. A flue gas treatment system (10) for a boiler (11) comprising a gas purifying unit (40) and a carbon dioxide separation unit (26) downstream of the gas purifying unit (40),
**characterised in that**
the gas purifying unit (40) comprises a first compression step (19), a selective catalytic reduction unit (SCR) downstream of the first compression step (19), a second compression step (20) downstream of the selective catalytic reduction unit (SCR).

2. The flue gas treatment system (10) according to claim 1, **characterised in that** the flue gas temperature at the outlet of the first compression step (19) matches the required flue gas temperature at an inlet of the selective catalytic reduction unit (SCR).

3. The flue gas treatment system (10) according to claim 2, **characterised in that** the outlet of the first compression step (19) is directly connected to the inlet of the selective catalytic reduction unit (SCR) without additional components inbetween.

4. The flue gas treatment system (10) according to claim 1, **characterised in that** a heat exchanger (30) for heating or cooling the flue gas is provided downstream of the first compression step (19) and upstream of the selective catalytic reduction unit (SCR).

5. The flue gas treatment system (10) according to claim 1, **characterised in that** the first compression step (19) is a substantially adiabatic compression step.

6. The flue gas treatment system (10) according to claim 1, **characterised in that** the first compression step (19) is arranged to compress the flue gas up to a pressure of 2-20 bar and preferably 5-15 bar.

7. The flue gas treatment system (10) according to claim 1, **characterised in that** the flue gas has a temperature 120-310°C and preferably 165-250°C at the inlet of the selective catalytic reduction unit (SCR).

8. The flue gas treatment system (10) according to claim 1, **characterised in that** a dryer (22) is provided downstream of the second compression step (20).

9. The flue gas treatment system (10) according to claim 1, **characterised in that** downstream of the carbon dioxide separation unit (26), a carbon dioxide compression stage (27) and a carbon dioxide sequestration stage (28) are provided.

10. The flue gas treatment system (10) according to claim 1, **characterised by** being connected downstream of an oxyfiring boiler.

11. The flue gas treatment system (10) according to claim 1, **characterised by** comprising an injection (32) for a reducing agent upstream of the selective catalytic reduction unit (SCR) and/or upstream the first compressor step (19) and/or directly before the inlet of the selective catalytic reduction unit (SCR).

12. The flue gas treatment system (10) according to claim 11, **characterised by** comprising a mixing device downstream the injection (32).

13. A method for flue gas treatment for a boiler (11) comprising purifying the flue and separating carbon dioxide after purifying,
**characterised in that**
purifying comprises a first flue gas compression (19), then flue gas selective catalytic reduction (SCR), then a second compression (20).

14. The method of claim 13, **characterised in that** the flue gas temperature at the outlet of the first compression (19) matches the required flue gas temperature at an inlet of the selective catalytic reduction (SCR).

15. The method according to claim 13, **characterised in that** after the first compression (19), the flue gas is directly supplied to the selective catalytic reduction (SCR).
